# EUROPEAN PATENT APPLICATION

(11) **EP 3 745 214 A1**
(43) Date of publication of application: **02.12.2020**
(21) Application number: 20175399.3
(22) Date of filing: 19.05.2020
(51) Int. Cl.: G03G 15/23, G03G 21/14, G03G 15/00

(54) **IMAGE FORMING APPARATUS**

(30) Priority: 23.05.2019 JP 2019097187
(71) Applicant: KYOCERA Document Solutions Inc., Osaka-shi, Osaka 540-8585 (JP)
(72) Inventor: YAMAMOTO, Takenori, Osaka-shi, Osaka (JP)
(74) Representative: Viering, Jentschura & Partner mbB Patent- und Rechtsanwälte

(57) **Abstract**

An image forming apparatus (10) includes a print engine (10a) to form a page image on a printing sheet, a sheet conveyance unit (10b) to convey the printing sheet to the print engine in a non-stop conveyance mode, a video board (63) to supply image data of the page image to the print engine, a controller board (61) to execute image processing to generate the image data and transfer the image data to the video board, and a conveyance control unit (82) to control the sheet conveyance unit. The video board includes a page memory (92), an image receiving unit (91), and an image output unit (93). The conveyance control unit causes the sheet conveyance unit to start conveyance of a printing sheet, on which the page image is to be printed, after the image data of the page image is stored in the page memory.

## Description

### BACKGROUND

The present disclosure relates to an image forming apparatus.

An image forming apparatus includes a controller board and an engine board. The engine board controls a print engine to perform a printing process, and the controller board prepares image data to be supplied to the engine board, transfers the image data to the engine board, and controls the start of the printing process and the like.

Typically, the engine board stops a printing sheet at a resist position short of the print engine. When the controller board completes preparation of image data of an image to be printed on the printing sheet, the controller board transfers the image data to the engine board. The engine board starts conveyance of the printing sheet from the resist position to the print engine and controls the print engine to form an image by a color material (toner or ink) on the printing sheet.

On the other hand, in continuous printing for a plurality of printing sheets, there has been proposed a non-stop conveyance mode in which printing sheets are conveyed to the print engine on a predetermined fixed cycle without stopping at the resist position. In the non-stop conveyance mode, if the transfer of image data is not appropriately started between the printing sheets, an overrun of a printing sheet occurs.

Further, in the double-sided printing which is not performed in the non-stop conveyance mode, even if the conveyance delay of a printing sheet to the print engine occurs, by changing the order of the pages to be printed so as to cause the printing on the second surface of the printing sheet (with the first surface already printed) retained in the circulating conveyance path to precede, the continuous printing does not need to be stopped. In the double-sided printing in the non-stop conveyance mode, however, the controller board detects the conveyance delay, then prepares and transfers, to the engine board, image data of the page image to be currently printed in a changed order, so that the transfer of the image data fails to meet the conveyance timing of the retained printing sheet to be conveyed to the print engine, which makes it difficult to perform control to cause the printing sheet retained in the circulating conveyance path to precede. (In other words, such control will cause an overrun during the printing on the second surface of the printing sheet retained in the circulating conveyance path).

### SUMMARY

An image forming apparatus according to the present disclosure includes a print engine to form a page image on a printing sheet, a sheet conveyance unit to convey the printing sheet to the print engine in a non-stop conveyance mode, a video board to supply image data of the page image to the print engine, a controller board to execute predetermined image processing to generate the image data and transfer the image data to the video board, and a conveyance control unit to control the sheet conveyance unit. The video board includes a page memory, an image receiving unit, and an image output unit. The conveyance control unit causes the sheet conveyance unit to start conveyance of a printing sheet, on which the page image is to be printed, after completion of storage of the image data of the page image in the page memory of the video board.

### BRIEF DESCRIPTION OF THE DRAWINGS

FIG. 1 is a side view for describing a mechanical internal configuration of an image forming apparatus according to an embodiment of the present disclosure.
FIG. 2 is a block diagram illustrating a configuration of a controller board used in the image forming apparatus according to the embodiment of the present disclosure.
FIG. 3 is a block diagram illustrating an electrical configuration of the image forming apparatus according to the embodiment of the present disclosure.
FIG. 4 is a sequence diagram for describing an operation of the image forming apparatus illustrated in FIGS. 1 and 3.
FIG. 5 is a sequence diagram for describing an operation of the image forming apparatus illustrated in FIGS. 1 and 3 when double-sided printing is performed.

### DETAILED DESCRIPTION

Hereinafter, an embodiment of the present disclosure will be described with reference to the drawings.

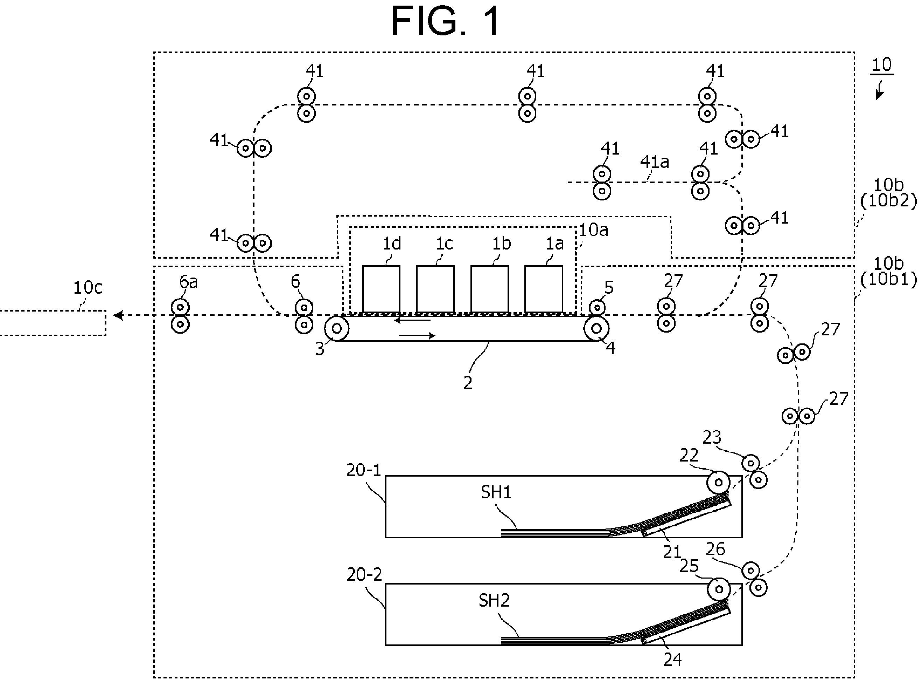

FIG. 1 is a side view for describing a mechanical internal configuration of an image forming apparatus according to an embodiment of the present disclosure. An image forming apparatus 10 according to the present embodiment is such an apparatus as a printer, a copier, a facsimile machine, or a multifunction peripheral.

The image forming apparatus 10 illustrated in FIG. 1 includes a print engine 10a and a sheet conveyance unit 10b. The print engine 10a physically forms a page image to be printed on a printing sheet (such as a printing sheet of paper). In this embodiment, the print engine 10a is a line-type inkjet print engine. Note that the print engine 10a may be an electrophotographic print engine of an electrophotographic type.

In this embodiment, the print engine 10a includes line-type inkjet recording units 1a to 1d corresponding to four ink colors of cyan, magenta, yellow, and black. In the present embodiment, each of the inkjet recording units 1a, 1b, 1c, and 1d has one or more head units.

The sheet conveyance unit 10b conveys the printing sheet before printing to the print engine 10a along the predetermined conveyance path, and conveys the printing sheet after printing from the print engine 10a to the predetermined discharge destination.

The image forming apparatus 10 executes high-speed continuous printing by the sheet conveyance unit 10b of the non-stop conveyance mode. Therefore, the sheet conveyance unit 10b conveys the printing sheet to the print engine 10a by the non-stop conveyance mode. In this embodiment, the sheet conveyance unit 10b is not provided with a resist roller for stopping the printing sheet at the resist position.

The sheet conveyance unit 10b includes a main sheet conveyance unit 10b1 and a circulating sheet conveyance unit 10b2. In the double-sided printing, the main sheet conveyance unit 10b1 conveys the printing sheet used for printing the page image on the first surface to the print engine 10a, and the circulating sheet conveyance unit 10b2 conveys the printing sheet from the subsequent stage to the front stage of the print engine 10a while retaining a predetermined number of printing sheets.

In this embodiment, the main sheet conveyance unit 10b1 includes an annular conveyance belt 2 that is disposed to face the print engine 10a and conveys the printing sheet, a drive roller 3 and a driven roller 4, on which the conveyance belt 2 is suspended, a suction roller 5 that nips the printing sheet together with the conveyance belt 2, and a pair of discharge rollers 6 and 6a.

The drive roller 3 and the driven roller 4 rotate the conveyance belt 2. Then, the suction roller 5 nips the printing sheets conveyed from a plurality of sheet feeding cassettes 20-1 and 20-2 described later, and the nipped printing sheets are sequentially conveyed to the print positions of the inkjet recording units 1a to 1d by the conveyance belt 2, and the images of the respective colors are printed by the inkjet recording units 1a to 1d. Then, the printing sheet after completion of the color printing is discharged to the discharge tray 10c or the like by the pair of discharge rollers 6 and 6a.

Further, the main sheet conveyance unit 10b1 includes the sheet feeding cassettes 20-1 and 20-2. The sheet feeding cassettes 20-1 and 20-2 house printing sheets SH1 and SH2, push up the printing sheets SH1 and SH2 upward by lift plates 21 and 24, and bring the printing sheets SH1 and SH2 into contact with pickup rollers 22 and 25. The printing sheets SH1 and SH2 placed in the sheet feeding cassettes 20-1 and 20-2 are picked up by the pickup rollers 22 and 25 from the top one by one to sheet feeding rollers 23 and 26. The sheet feeding rollers 23 and 26 are rollers for conveying the sheets SH1 and SH2, which are fed by the pickup rollers 22 and 25 from the sheet feeding cassettes 20-1 and 20-2, to the conveyance path one by one, respectively. A conveyance roller 27 is a conveyance roller on the conveyance path, which is common to the printing sheets SH1 and SH2 conveyed from the sheet feeding cassettes 20-1 and 20-2.

The circulating sheet conveyance unit 10b2 returns the printing sheet from a predetermined position on the downstream side to a predetermined position on the upstream side of the print engine 10a in the double-sided printing. The circulating sheet conveyance unit 10b2 includes a conveyance roller 41, and a switchback conveyance path 41a that reverses the traveling direction of the printing sheet to switch the surface of the printing sheet facing the print engine 10a from the first surface to the second surface.

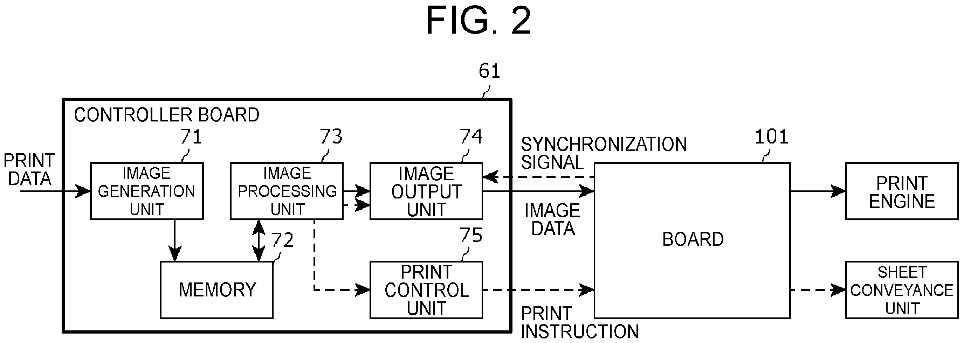

FIG. 2 is a block diagram illustrating a configuration of a controller board 61 used in the image forming apparatus 10 according to the embodiment of the present disclosure.

The controller board 61 does not have a non-stop conveyance function (namely, a function of managing the conveyance timing of the printing sheet in the non-stop conveyance mode). The controller board 61 includes an image generation unit 71, a memory 72, an image processing unit 73, an image output unit 74, and a print control unit 75. Specifically, the controller board 61 includes an arithmetic processing unit such as a computer that executes a predetermined program, an application specific integrated circuit (ASIC) that executes specific data processing, and the like, and the arithmetic processing unit functions as the image generation unit 71, the memory 72, the image processing unit 73, the image output unit 74, and the print control unit 75.

The image generation unit 71 generates raster image data of an image to be printed from the print data described in the page description language.

The memory 72 stores image data generated by the image generation unit 71, image data subjected to image processing performed by the image processing unit 73, and the like. Here, the memory 72 is a random access memory (RAM).

The image processing unit 73 performs predetermined image processing on the above-described image data. Specifically, the image processing unit 73 executes predetermined image processing such as an image rotation at 90°, 180°, or 270°, an image synthesis, color conversion, a color tone correction based on gamma curve, a halftoning, and a consumed toner reduction process (for example, thinning of characters or reduction in density), and the like.

The image output unit 74 transfers the image data after the image processing to a subsequent board 101 (board for controlling the print engine) according to a synchronization signal.

For example, upon detecting the arrival of the printing sheet at the resist position, the subsequent board 101 transmits a synchronization signal to the controller board 61, and the controller board 61 begins to transfer the image data in accordance with the synchronization signal. The subsequent board 101 does not have a page memory, and outputs the transferred image data to the print engine sequentially.

The print control unit 75 transmits a print instruction to the subsequent board 101 (board for controlling the print engine or the sheet conveyance unit).

As described above, in the image forming apparatus 10 according to this embodiment, the controller board 61 is used in the stop conveyance system, in which the printing sheet is temporarily stopped at the resist position short of the print engine.

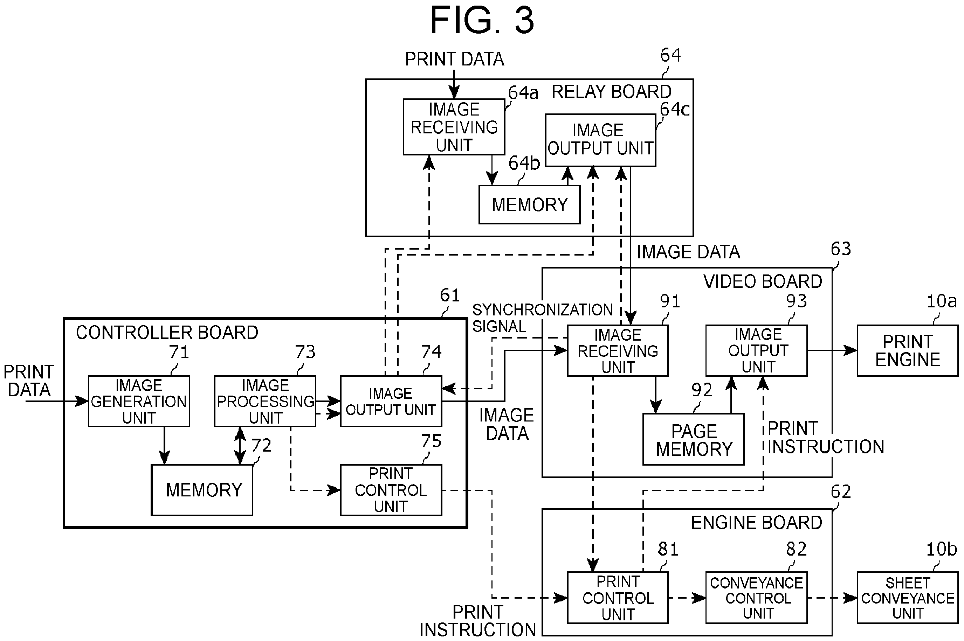

FIG. 3 is a block diagram illustrating an electrical configuration of an image forming apparatus 10 according to an embodiment of the present disclosure. As shown in FIG. 3, the image forming apparatus 10 includes, in addition to the print engine 10a and the sheet conveyance unit 10b as illustrated in FIG. 1 and the controller board 61 as above, an engine board 62, a video board 63, and a relay board 64.

As described above, the controller board 61 performs predetermined image processing to generate image data of the page image. In the present embodiment, the controller board 61 transfers the image data of the page image to the video board 63.

The engine board 62 includes a print control unit 81 and a conveyance control unit 82. Specifically, the engine board 62 includes an arithmetic processing unit such as a computer that executes a predetermined program and an ASIC that executes specific data processing, and the arithmetic processing unit functions as the print control unit 81 and the conveyance control unit 82.

The print control unit 81 instructs the image output unit 93 of the video board 63 to output the image data of the page image to be output from the video board 63 to the print engine 10a.

The conveyance control unit 82 controls the sheet conveyance unit 10b. Specifically, the conveyance control unit 82 electrically controls drive devices (such as motors) of the drive roller 3, the driven roller 4, the suction roller 5, the pair of discharge rollers 6 and 6a, the sheet feeding rollers 23 and 26, and the conveyance rollers 27 and 41, and the like.

In particular, after the storage of the image data of the page image in a page memory 92 of the video board 63 is completed, the conveyance control unit 82 causes the sheet conveyance unit 10b to start the conveyance of the printing sheet on which the page image is to be printed.

In the case of double-sided printing, in which page images are printed on both sides (namely, first and second surfaces) of a printing sheet, respectively, the controller board 61 (image output unit 74) sequentially transfers image data of a plurality of page images required for double-sided printing to the video board 63, and the conveyance control unit 82 causes the sheet conveyance unit 10b to perform the conveyance of a printing sheet for printing the page images of the first surface and the second surface after the storage of the image data of the page images of both the first surface and the second surface is completed in the page memory 92 of the video board 63.

In the double-sided printing, the conveyance control unit 82 (a)causes the printing sheet in the main sheet conveyance unit 10b1 and the printing sheet in the circulating sheet conveyance unit 10b2 to be conveyed to the print engine 10a in a predetermined order and on a predetermined fixed cycle, and (b)conveys the printing sheet retained in the circulating sheet conveyance unit 10b1 precedently when a conveyance delay occurs in the main sheet conveyance unit 10b2.

The video board 63 supplies the image data of the page image to the print engine 10a. The video board 63 includes an image receiving unit 91, a page memory 92, and an image output unit 93. Specifically, the video board 63 includes an arithmetic processing unit such as a computer that executes a predetermined program and an ASIC that executes specific data processing, and the arithmetic processing unit functions as the image receiving unit 91 and the image output unit 93.

The image receiving unit 91 receives image data of a page image transferred from the controller board 61, and stores the received image data in the page memory 92. The page memory 92 temporarily stores image data of one or more page images. For example, the page memory 92 is a RAM.

In this embodiment, when the storage of the image data of the page image in the page memory 92 of the video board 63 is completed, the image receiving unit 91 transmits the ready signal (for the page image) to the print control unit 81 of the engine board 62. Note that, in the engine board 62, when the print control unit 81 receives the ready signal, the conveyance control unit 82 causes the sheet conveyance unit 10b to start conveyance of the printing sheet on which the page image is to be printed.

The image output unit 93 reads the image data of the page image to be printed from the page memory 92, and outputs the image data to the print engine 10a. The page image to be printed is designated by the print control unit 81 of the engine board 62.

In the double-sided printing, when a conveyance delay occurs in the main sheet conveyance unit 10b1 as described above, the printing sheet in the circulating sheet conveyance unit 10b2 is conveyed precedently, and the image output unit 93 outputs the image data of the page image of the second surface that is to be printed on the preceding printing sheet, to the print engine 10a, prior to the image data of the page image of the first surface to be printed on the printing sheet on which the conveyance delay has occurred.

The relay board 64 receives print data (image data subjected to rasterizing and image processing) transferred from an external controller in an image receiving unit 64a, stores the received data in a memory 64b, reads the print data from the memory 64b by an image output unit 64c, and transfers the read data to the video board 63 in the same manner as the controller board 61.

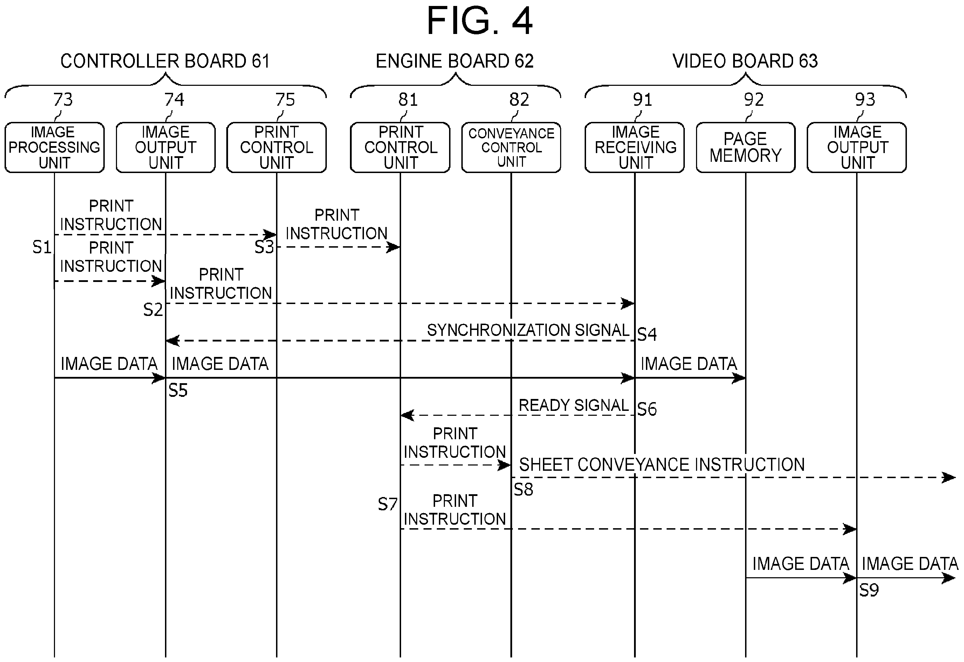

Next, the operation of the above-described image forming apparatus 10 will be described. FIG. 4 is a sequence diagram for describing the operation of the image forming apparatus 10 illustrated in FIGS. 1 and 3.

When the image generation unit 71 receives the print data from a host apparatus by using a communication apparatus (not illustrated), the image generation unit 71 sequentially generates image data of the page image and stores the generated image data in the memory 72.

On the other hand, the image processing unit 73 reads the image data of the page image, and performs predetermined image processing on the image data. When the image processing is completed, the preparation of the image data of the page image is completed.

When the preparation of the image data of the page image to be printed is completed, the image processing unit 73 transmits a print instruction to the image output unit 74 and the print control unit 75 (step S1). Upon accepting the print instruction, the image output unit 74 transmits the print instruction to the image receiving unit 91 of the video board 63 (step S2).

The print control unit 75 of the controller board 61 transmits a print instruction to the print control unit 81 of the engine board 62 for each sheet (step S3). That is, when the preparation of the image data of the page image (page images for both surfaces in the case of double-sided printing) to be printed on the i-th sheet (i = 1, ... , N: N> 0) in the print job is completed, the print control unit 75 of the controller board 61 transmits the print instruction of the i-th printing sheet to the print control unit 81 of the engine board 62.

Upon accepting the print instruction from the image output unit 74 of the controller board 61, the image receiving unit 91 transmits the synchronization signal to the image output unit 74 of the controller board 61 (step S4), and the image output unit 74 starts transferring the image data of the page image in accordance with the synchronization signal (step S5). The image receiving unit 91 of the video board 63 receives the image data of the page image, and stores the received image data in the page memory 92.

When the storage of the image data of the page image in the page memory 92 is completed, the image receiving unit 91 transmits the ready signal to the print control unit 81 of the engine board 62 (step S6).

Upon receiving the ready signal for all the images to be printed on the i-th printing sheet, for which the print instruction has been accepted, the print control unit 81 of the engine board 62 transmits the print instruction to the conveyance control unit 82 and the image output unit 93 of the video board 63 (step S7), and the conveyance control unit 82 transmits a sheet conveyance instruction to convey the i-th printing sheet to the sheet conveyance unit 10b immediately upon receiving the print instruction (step S8).

The image output unit 93 reads the image data of the page image to be printed on the printing sheet from the page memory 92 in synchronization with the conveyance of the printing sheet, and outputs the image data to the print engine 10a (step S9).

Accordingly, the printing sheet is conveyed to the print engine 10a without stopping short of the print engine 10a, and the print engine 10a prints a page image on the printing sheet. Further, since the page memory 92 is provided, transfer of image data of a page image from the controller board 61 to the video board 63 can be performed asynchronously with the conveyance of the printing sheet. Therefore, even when the conveyance of the printing sheet is started after the completion of the storage of the image data of the page image in the page memory 92, the page image is prepared in the page memory 92 on the above-described fixed cycle by continuously executing the transfer of the image data of the page images of a plurality of pages. Thereby, continuous printing in the non-stop conveyance mode is executed.

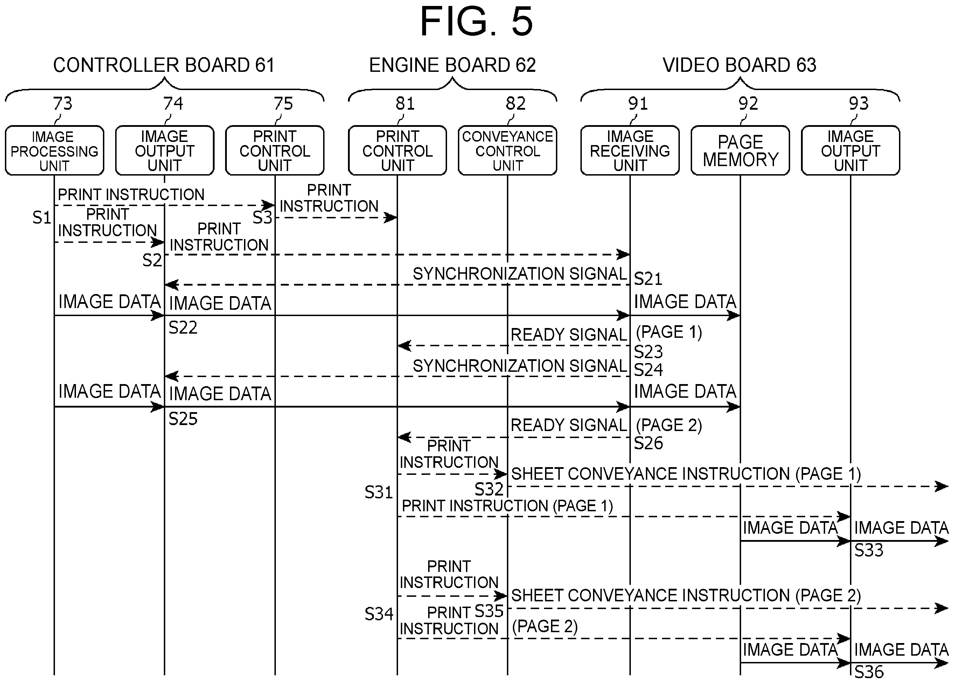

The operation at the time of double-sided printing will now be described. FIG.5 is a sequence diagram for describing an operation of the image forming apparatus 10 illustrated in FIGS. 1 and 3 when double-sided printing is performed.

When the image generation unit 71 receives the print data from the host apparatus by using a communication apparatus (not illustrated), the image generation unit 71 sequentially generates image data of the page image in the page order of the document to be printed by the double-sided printing, and stores the image data in the memory 72.

On the other hand, the image processing unit 73 reads the image data of the page image, and performs predetermined image processing on the image data. When the image processing is completed, the preparation of the image data of the page image is completed.

When the preparation of the image data of the page image to be printed is sequentially completed, the image processing unit 73 sequentially transmits the print instruction to the image output unit 74 and the print control unit 75 (step S1). Upon accepting the print instruction, the image output unit 74 transmits a print instruction to the image receiving unit 91 of the video board 63 (step S2).

The print control unit 75 of the controller board 61 transmits a print instruction to the print control unit 81 of the engine board 62 for each sheet (step S3). That is, when the preparation of the image data of the page images (page images for both surfaces) to be printed on the i-th sheet (i = 1, ... , N: N> 0) in the print job is completed, the print control unit 75 of the controller board 61 transmits the print instruction of the i-th printing sheet to the print control unit 81 of the engine board 62.

Upon accepting the print instruction from the image output unit 74 of the controller board 61, the image receiving unit 91 transmits the synchronization signal to the image output unit 74 of the controller board 61 (step S21), and the image output unit 74 starts transferring the image data of one page image in accordance with the synchronization signal (step S22). The image receiving unit 91 of the video board 63 receives the image data of the page image, and stores the received image data in the page memory 92. When the storage of the image data of the page image in the page memory 92 is completed, the image receiving unit 91 transmits the ready signal for the page image to the print control unit 81 of the engine board 62 (step S23).

Subsequently, the image receiving unit 91 transmits the synchronization signal to the image output unit 74 of the controller board 61 (step S24), and the image output unit 74 starts transfer of the image data of the other page image in accordance with the synchronization signal (step S25). The image receiving unit 91 of the video board 63 receives the image data of the page image, and stores the received image data in the page memory 92. When the storage of the image data of the page image in the page memory 92 is completed, the image receiving unit 91 transmits the ready signal for the page image to the print control unit 81 of the engine board 62 (step S26).

Then, upon receiving the ready signal for all the images to be printed on the i-th printing sheet, for which the print instruction has been accepted, the print control unit 81 of the engine board 62 transmits a print instruction for the first surface of double-sided printing (that is, the surface to be printed first out of the two surfaces) to the conveyance control unit 82 and the image output unit 93 of the video board 63 (step S31), and the conveyance control unit 82 transmits the sheet conveyance instruction for the i-th printing sheet to the sheet conveyance unit 10b immediately upon receiving the print instruction (step S32).

The image output unit 93 reads the image data of the page image of the first surface to be printed on the printing sheet from the page memory 92 in synchronization with the conveyance of the printing sheet, and outputs the image data to the print engine 10a (step S33).

Accordingly, the printing sheet is conveyed to the print engine 10a by the main sheet conveyance unit 10b1 without stopping short of the print engine 10a, and the page image of the first surface is printed on the printing sheet by the print engine 10a.

Thereafter, the printing sheet is conveyed to a position short of the print engine 10a by the circulating sheet conveyance unit 10b2 in order for printing of the second surface. When the print timing of the second surface based on the predetermined print order is reached, the print control unit 81 of the engine board 62 transmits a print instruction for the second surface of double-sided printing (that is, the surface to be printed later out of the two surfaces) to the conveyance control unit 82 and the image output unit 93 of the video board 63 (step S34). Upon receiving the print instruction, the conveyance control unit 82 transmits a sheet conveyance instruction of the i-th printing sheet to the sheet conveyance unit 10b (step S35).

The image output unit 93 reads the image data of the page image of the second surface to be printed on the printing sheet from the page memory 92 in synchronization with the conveyance of the printing sheet, and outputs the image data to the print engine 10a (step S36).

Accordingly, the printing sheet is conveyed to the print engine 10a by the circulating sheet conveyance unit 10b2 (and the main sheet conveyance unit 10b1) without stopping short of the print engine 10a, and the page image of the second surface is printed on the printing sheet by the print engine 10a.

For example, when the circulating sheet conveyance unit 10b2 retains three printing sheets and the printing is performed first on the back side of a printing sheet (that is to say, a page out of the pages to be printed on the printing sheet that is a following page in the page order of the document is to be first printed), and when double-sided printing is performed for eight pages of a document, the eight pages are printed in the order of page 2, page 4, page 1, page 6, page 3, page 8, page 5, and page 7, with pages 2, 4, 6, and 8 of the document being each printed on the first surface and pages 1, 3, 5, and 7 being each printed on the second surface.

When the above-described conveyance delay is detected by a sensor (not illustrated) in the first surface printing, the print control unit 81 changes the page order of print to cause printing on the second surface of a printing sheet (with the first surface already printed) retained in the circulating sheet conveyance unit 10b2 to precede. Since the conveyance of the printing sheet is started after the storage of the image data of the page images of both the first surface and the second surface of the printing sheet in the page memory 92 is completed, the image data of the page image of the second surface is already stored in the page memory 92. The image output unit 93 outputs the image data of the page image of the second surface to the print engine 10a in accordance with the conveyance timing of the printing sheet retained in the circulating sheet conveyance unit 10b2 to the print engine 10a.

Accordingly, in the double-sided printing in the non-stop conveyance mode, even if the conveyance delay occurs, the continuous printing does not need to be stopped.

For example, in the case where the pages are to be printed in the order of page 2, page 4, page 1, page 6, page 3, page 8, page 5, and page 7, as described above, when a conveyance delay occurs in a printing sheet for page 8 (to be printed on the first surface) of the document, the order of pages to be printed is changed to the order of page 2, page 4, page 1, page 6, page 3, (blank), page 5, page 8, (blank), and page 7. Note that "(blank)" indicates a conveyance timing at which the conveyance of the printing sheet is not carried out. When the conveyance delay of the printing sheet for page 8 (to be printed on the first surface) is detected, the printing sheet for page 5 subsequent to page 8 (namely, the printing sheet, on the first surface of which page 6 has been printed) is conveyed from the circulating sheet conveyance unit 10b2 to the print engine 10a by the conveyance control unit 82 prior to the printing sheet for page 8. The image data of the page image of page 5 is output to the print engine 10a by the image output unit 93, and the page image of page 5 is printed on the second surface of the printing sheet for page 5.

According to the above-described embodiment, the sheet conveyance unit 10b conveys the printing sheet to the print engine 10a in the non-stop conveyance mode. The video board 63 supplies the image data of the page image to the print engine 10a. The controller board 61 executes predetermined image processing to generate image data and transfer the generated image data to the video board 63. The video board 63 includes the page memory 92 for temporarily storing the image data, the image receiving unit 91 for receiving the image data of the page image transferred from the controller board 61 and storing the image data in the page memory 92, and the image output unit 93 for reading out the image data from the page memory 92 and outputting the image data to the print engine 10a. Then, after the storage of the image data of the page image in the page memory 92 of the video board 63 is completed, the conveyance control unit 82 causes the sheet conveyance unit 10b to start the conveyance of the printing sheet on which the page image is to be printed.

As a result, even when the existing controller board 61 that does not support the non-stop conveyance is used, the occurrence of an overrun of the printing sheet in the non-stop conveyance mode is suppressed, and it is possible to perform high-speed continuous printing at a high speed.

It will be apparent to those skilled in the art that various changes and modifications to the above-described embodiments may be made. Such changes and modifications may be made without departing from the spirit and scope of the subject matter and without diminishing the intended advantages. That is, it is intended that such modifications and alterations be included within the scope of the claims.

## Claims

1. An image forming apparatus (10) comprising:
a print engine (10a) that forms a page image on a printing sheet;
a sheet conveyance unit (10b) that conveys the printing sheet to the print engine (10a) in a non-stop conveyance mode;
a video board (63) that supplies image data of the page image to the print engine (10a);
a controller board (61) that executes predetermined image processing to generate the image data and transfer the image data to the video board (63); and
a conveyance control unit (82) that controls the sheet conveyance unit (10b),
wherein the video board (63) includes:
a page memory (92) that temporarily stores the image data;
an image receiving unit (91) that receives the image data of the page image transferred from the controller board (61) and stores the image data in the page memory (92); and
an image output unit (93) that reads the image data from the page memory (92) and outputs the image data to the print engine (10a), and
wherein the conveyance control unit (82) causes the sheet conveyance unit (10b) to start conveyance of a printing sheet, on which the page image is to be printed, after completion of storage of the image data of the page image in the page memory (92) of the video board (63).

2. The image forming apparatus (10) according to claim 1,
wherein the controller board (61) sequentially transfers image data of a plurality of page images required for double-sided printing to the video board (63) if the double-sided printing is to be performed, and
wherein the conveyance control unit (82) causes the sheet conveyance unit (10b) to start conveyance of a printing sheet, on a first surface and a second surface of which the plurality of page images for the double-sided printing are to be printed, after completion of storage of image data of the plurality of page images for both the first surface and the second surface in the page memory (92) of the video board (63).

3. The image forming apparatus (10) according to claim 2,
wherein the sheet conveyance unit (10b) includes a main sheet conveyance unit (10b1) that conveys a printing sheet used for printing a page image for the first surface to the print engine (10a) in the double-sided printing, and a circulating sheet conveyance unit 10b2) that retains a predetermined number of printing sheets in the double-sided printing,
wherein the conveyance control unit (82) (a)causes a printing sheet in the main sheet conveyance unit (10b1) and a printing sheet in the circulating sheet conveyance unit 10b2) to be conveyed to the print engine (10a) in a predetermined order and on a predetermined fixed cycle and (b) causes, if conveyance delay has occurred in the main sheet conveyance unit (10b1), a printing sheet retained in the circulating sheet conveyance unit 10b2) to be precedently conveyed, and
wherein, if conveyance delay has occurred in the main sheet conveyance unit (10b1), the image output unit (93) outputs, to the print engine (10a), image data of a page image for the second surface to be printed on the printing sheet precedently conveyed prior to image data of the page image for the first surface to be printed on a printing sheet with the conveyance delay having occurred.

4. The image forming apparatus (10) according to claim 1, further comprising an engine board (62),
wherein the engine board (62) includes a print control unit (81) that instructs the image output unit (93) of the image data of the page image to be output, and the conveyance control unit (82),
wherein the image receiving unit (91) transmits a ready signal to the print control unit (81) of the engine board (62) when the storage of the image data of the page image in the page memory (92) of the video board (63) is completed, and
wherein, when the print control unit (81) receives the ready signal, the conveyance control unit (82) causes the sheet conveyance unit (10b) to start the conveyance of the printing sheet, on which the page image is to be printed.
